# FASCICULE DE BREVET EUROPEEN

(11) **EP 1 187 703 B1**
(45) Date de publication et mention de la délivrance du brevet: **27.08.2003**
(21) Numéro de dépôt: 00951596.6
(22) Date de dépôt: 16.06.2000
(51) Int. Cl.: B25B 5/12, B23Q 3/18

(54) **OUTIL DE CENTRAGE ET DE SERRAGE**
ZENTRIER- UND SPANN-WERKZEUG
CENTRING AND CLAMPING TOOL

(30) Priorité: 18.06.1999 FR 9907749
(43) Date de publication de la demande: 20.03.2002
(73) Titulaire: Menage, Christine, 92200 Neuilly-sur-Seine (FR); Dawidowicz, Armand, 92200 Neuilly-sur-Seine (FR); Beffrieu, Michel, 93460 Gournay (FR)
(72) Inventeur: BEFFRIEU, Michel, F-92460 Gournay (FR)
(74) Mandataire: Dawidowicz, Armand
(86) Numéro de dépôt international: FR0001671
(87) Numéro de publication internationale: WO00078507

(56) Documents cités:
- DE-U- 29 713 607
- FR-A- 2 733 930
- FR-A- 2 757 437

## Description

La présente invention concerne un outil de centrage et de serrage d'au moins une pièce à fixer en position.

Les outils de centrage et/ou de serrage sont généralement montés fixes sur des cadres porteurs. Un tel outil de centrage et de serrage peut être, par exemple, du type de celui décrit dans le brevet FR-B-2 757 437 et comprend un organe pilote porté à l'extrémité d'un carter ou corps et des organes de serrage ainsi que des moyens d'entraînement en pivotement et en translation des organes de serrage entre une position de centrage dans laquelle les organes de serrage sont effacés à l'intérieur de l'organe pilote et une pluralité de positions de serrage dans lesquelles les organes de serrage sont en saillie à l'extérieur de l'organe pilote, lesdits moyens d'entraînement étant agencés pour produire simultanément l'entraînement en pivotement et en translation desdits organes de serrage.

De manière à favoriser la bonne tenue du serrage, on prévoit en général une face de référence ou face d'appui ménagée sur le carter, par exemple à l'aide d'une pièce rapportée entourant l'organe pilote, et contre laquelle repose la pièce à fixer en regard des moyens de serrage en position déployée.

Ce type d'outil de centrage et de serrage est donc utilisé pour fixer des pièces d'un même type, c'est-à-dire qui présentent généralement un passage traversant de même diamètre et dont l'épaisseur, constante, correspond à l'intervalle donné entre la face d'appui de la pièce et les moyens de serrage en position de serrage.

Un outil selon le préambule de la revendication 1 est connu de FR-A- 2 733 930.

Un problème se pose quand on souhaite utiliser cet outil de centrage et de serrage pour une pièce présentant un passage traversant de même diamètre mais qui présente une épaisseur différente. Il est alors nécessaire de procéder à un changement de l'outil par un autre correspondant à la nouvelle épaisseur, c'est-à-dire dont l'intervalle donné entre la face d'appui de la pièce et les moyens de serrage est approprié pour cette nouvelle pièce.

Une autre possibilité consiste à modifier la pièce formant la face d'appui et qui est fixée sur le carter pour définir ce nouvel intervalle.

Dans les deux cas, ceci entraîne des pertes de temps dans la mesure où il convient de démonter l'outil de centrage et de serrage puis de monter un nouvel outil ou de modifier cet outil.

Afin de pallier cet inconvénient, la présente invention a pour but de proposer un outil de centrage et de serrage qui permet de démonter facilement l'outil de centrage et de serrage et réaliser de manière simple le serrage de pièces ayant le même diamètre pour le centrage mais pouvant être d'épaisseurs différentes.

A cet effet, l'invention a pour objet un outil de centrage et de serrage d'une pièce à fixer comportant un passage traversant et ajusté pour ledit outil, ledit outil comprenant un organe pilote, au moins un moyen de serrage monté sur l'organe pilote et un corps renfermant les moyens d'entraînement et de pilotage dudit outil ledit moyen de serrage étant mobile, sous l'action des moyens d'entraînement, entre une position de centrage dans laquelle il est effacé à l'intérieur de l'organe pilote et une position de serrage dans laquelle il est en saillie à l'extérieur de l'organe pilote de telle façon que la pièce à fixer est serrée entre le moyen de serrage et une face d'appui, ledit outil comportant également un support de fixation comprenant une pièce d'appui munie d'une cheminée dans laquelle est monté l'organe pilote dudit outil, ledit organe pilote étant en saillie à l'extrémité libre de ladite pièce d'appui, ladite extrémité libre constituant la face de référence ou face d'appui de la pièce à fixer tandis que le corps de l'outil est serré contre une face du support opposée à ladite pièce d'appui, caractérisé en ce qu'une cale interchangeable amovible est interposée entre le corps de l'outil et la face du support opposée à la pièce d'appui contre laquelle le corps est serré.

Ainsi de manière avantageuse, le support de fixation sert au montage de l'outil selon l'invention sur une surface de réception et facilite un changement de l'outil dans la mesure où, le support restant fixé, on remplace seulement la partie active de l'outil de centrage et de serrage (moyens de serrage-organe pilote-corps) par une autre sur le support.

Ainsi, l'extrémité libre de la pièce d'appui constitue la face de référence ou face d'appui de la pièce à fixer et l'intervalle entre cette face d'appui et le ou les moyens de serrage en position de serrage, correspondant à l'épaisseur de la pièce à fixer, est déterminé par la portion de l'organe pilote en saillie de la cheminée de ladite pièce d'appui. En conséquence, l'interposition ou non d'une cale entre le corps et la face du support opposée à la pièce d'appui permet de modifier cet intervalle puisqu'elle influe sur la saillie de l'organe pilote à l'extrémité libre de la pièce d'appui.

De ce fait, l'épaisseur de la cale interposée entre le corps de l'outil de centrage et de serrage et la face du support contre laquelle est serrée ledit corps contribue à définir la grandeur de l'intervalle.

Ainsi, le support de fixation de l'outil de centrage et de serrage selon l'invention facilite non seulement un changement d'outil mais permet de définir pour un même outil une face d'appui de la pièce à fixer dont la distance par rapport aux moyens de serrage en position de serrage peut varier du fait du positionnement de cet outil dans le support.

Par conséquent, lorsque la pièce à serrer change et présente une épaisseur différente, il convient de modifier l'intervalle entre les moyens de serrage en position de serrage et la face d'appui, cette modification de l'intervalle pouvant alors intervenir de manière simple en positionnant une cale d'une épaisseur appropriée ou en changeant une cale déjà installée et en la remplaçant par une cale d'une nouvelle épaisseur appropriée.

Ainsi, l'outil de centrage et de serrage selon l'invention est utilisable pour des pièces pourvues d'un passage traversant de même diamètre mais présentant des épaisseurs différentes, par simple mise en place ou changement de la cale amovible interchangeable.

Selon une première variante de cette forme de réalisation, la cale est rigide et son épaisseur correspond à une grandeur d'intervalle donnée.

Selon une seconde variante de cette forme de réalisation de l'invention, la cale est élastiquement déformable et peut être réalisée, par exemple, en un matériau élastiquement déformable ou bien présenter une structure à capacité d'écrasement élastique telle qu'une rondelle Belleville de telle sorte que, lors de variations dans l'épaisseur des pièces à serrer, la déformabilité élastique de la cale permet la compensation de ces variations en autorisant un déplacement axial de l'outil de centrage et de serrage par rapport au support de fixation pour autoriser un bon positionnement des moyens de serrage et donc une parfaite tenue de la pièce. Ainsi, l'épaisseur de la cale définit l'intervalle entre la face d'appui et le ou les moyens de serrage mais en outre, la déformabilité permet une adaptation de cet intervalle lors de différences dans l'épaisseur de pièces, par exemple supposées de même épaisseur.

On décrira maintenant un exemple de réalisation de l'invention plus en détail en référence au dessin dans lequel:
la figure 1 représente une vue en perspective du dessus d'un outil de centrage et de serrage selon l'invention ;
la figure 2 représente une vue en perspective du dessus selon la figure 1 en position de centrage et de serrage d'une pièce ; et
la figure 3 représente une vue latérale schématique d'un organe de centrage et de serrage selon l'invention.

Un outil de centrage et de serrage 1 selon l'invention comporte un corps 2 surmonté d'un organe pilote 3 à l'intérieur duquel sont montés des organes de serrage 4 tels que des doigts entraînables en translation et en rotation entre une position où ils sont effacés dans l'organe pilote 3 et une position où ils sont déployés sous l'effet de moyens d'entraînement renfermés dans le corps 2.

L'outil de centrage et de serrage comporte en outre un support de fixation comprenant une pièce d'appui 6 munie d'une cheminée 7 et une équerre de fixation 8 présentant sensiblement la forme d'un U, l'une des ailes 82 du U et sa base 81 étant destinées à la fixation de l'outil de centrage et de serrage tandis que l'autre aile 83 du U est solidaire de la pièce d'appui 6 et présente un passage traversant 83a ménagé dans le prolongement de la cheminée 7. Le support de fixation présente donc des moyens de fixation sur une surface de réception et il peut se présenter également sous la forme d'un carter dont les faces et le fond peuvent servir à la fixation.

L'organe pilote 3 est monté dans la cheminée 7 de la pièce d'appui 6 de manière à être en saillie à l'extrémité libre de la pièce d'appui 6 de telle sorte que cette extrémité libre constitue une face de référence ou face d'appui 9 pour la pièce à fixer 10 munie d'un passage traversant 10a.

Le corps 2 est serré contre la face du support opposée à la pièce d'appui 6 par tous moyens connus en soi. De préférence, les moyens de serrage du corps contre la face du support sont facilement manipulables pour autoriser un desserrage rapide du corps 2 en vue soit de son remplacement par un autre outil soit en vue de la mise en place d'une cale 11 interchangeable interposée entre le support et le corps 2.

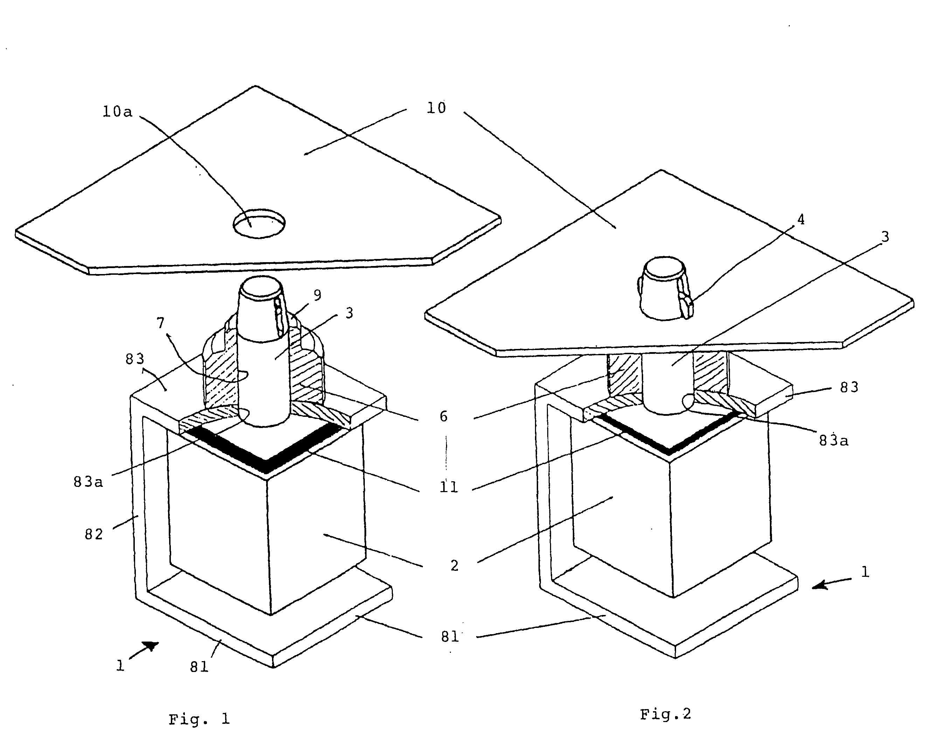

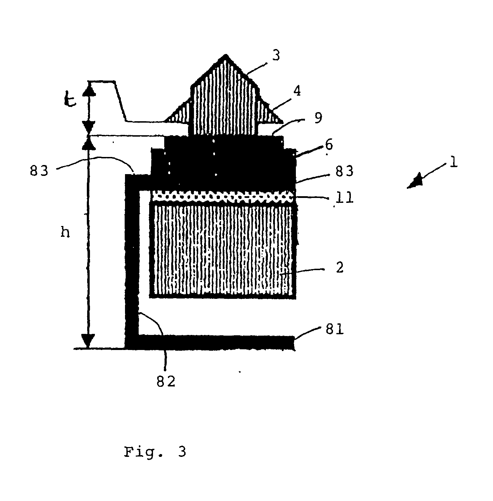

Un intervalle t défini entre les doigts 4 en position déployée (voir figure 3) et la face de référence 9 correspond à l'épaisseur de la pièce à serrer 10.

De manière à autoriser une variation de cet intervalle t en correspondance avec une variation de l'épaisseur de la pièce à serrer 10, la cale 11 amovible et interchangeable est interposée entre le support et le corps 2.

Ainsi, il suffit de modifier l'épaisseur de la cale 11 pour modifier la dimension de l'intervalle t, la hauteur h (base-face de référence 9) correspondant à l'ensemble support de fixation et outil de centrage et de serrage ne changeant pas.

De cette manière, lorsqu'on veut utiliser un outil de centrage et de serrage comportant un tel support pour des pièces d'une épaisseur puis pour des pièces présentant d'autres épaisseurs, on modifie l'ensemble en changeant la cale 11 en correspondance. On ne procède donc plus systématiquement au démontage complet de l'outil de centrage et de serrage.

De préférence, la cale 11 est élastiquement déformable et est réalisée en un matériau élastiquement déformable tel qu'un élastomère ce qui, lors du fonctionnement de l'outil de serrage et de centrage, autorise un déplacement axial de celui-ci et donc une modification de l'intervalle t de manière à compenser des variations dans l'épaisseur des pièces à traiter.

Ainsi, comme on peut le voir à la figure 2, la cale 11 a été comprimée et la valeur de cette compression a permis un déplacement axial de l'organe pilote d'autant par rapport à la face d'appui 9 ce qui a modifié l'intervalle t pour compenser une variation dans l'épaisseur de la pièce 6.

## Revendications

1. Outil de centrage et de serrage (1) d'une pièce à fixer (10) comportant un passage traversant (10a) et ajusté pour ledit outil (1), ledit outil comprenant un organe pilote (3) adapté pour passer au travers du passage de la pièce à fixer, au moins un moyen de serrage (4) monté sur l'organe pilote (3) et un corps (2) renfermant les moyens d'entraînement et de pilotage dudit outil (1), ledit moyen de serrage (4) étant mobile, sous l'action des moyens d'entraînement, entre une position de centrage dans laquelle il est effacé à l'intérieur de l'organe pilote (3) et une position de serrage dans laquelle il est en saillie à l'extérieur de l'organe pilote (3) de telle façon que la pièce à fixer (10) est serrée entre le moyen de serrage (4) et une face d'appui (9), ledit outil comportant également un support de fixation comprenant une pièce d'appui (6) munie d'une cheminée (7) dans laquelle est monté l'organe pilote (3) dudit outil (1), ledit organe pilote (3) étant en saillie à l'extrémité libre de ladite pièce d'appui (6), ladite extrémité libre constituant la face de référence ou face d'appui (9) de la pièce à fixer (10) tandis que le corps (2) de l'outil (1) est serré contre une face du support opposée à ladite pièce d'appui (6),
**caractérisé en ce qu'**une cale interchangeable amovible (11) est interposée entre le corps (2) de l'outil et la face du support opposée à la pièce d'appui (6) contre laquelle le corps (2) est serré, l'épaisseur de la cale (11) interposée entre le corps (2) de l'outil de centrage et de serrage (1) et la face du support contre laquelle est serrée ledit corps (2) contribuant à définir la grandeur de l'intervalle (t) entre la face d'appui (9) de la pièce à fixer (10) et le ou les moyens de serrage (4).

2. Outil de centrage et de serrage selon la revendication 1,
**caractérisé en ce que** la cale (11) est rigide et son épaisseur correspond à une grandeur d'intervalle (t) donnée.

3. Outil de centrage et de serrage selon la revendication 1,
**caractérisé en ce que** la cale (11) est élastiquement déformable.

4. Outil de centrage et de serrage selon la revendication 3,
**caractérisé en ce que** la cale (11) est réalisée en un matériau élastiquement déformable tel qu'un élastomère.

5. Outil de centrage et de serrage selon la revendication 3,
**caractérisé en ce que** la cale (11) présente une structure à capacité d'écrasement élastique telle qu'une rondelle Belleville.

6. Outil de centrage et de serrage selon l'une des revendications 1 à 5,
**caractérisé en ce que** le support comporte en outre une équerre de fixation sensiblement en forme de U dont l'une des ailes (82) et la base (81) servent à la fixation de l'outil, l'autre aile (83) du U étant solidaire de la pièce d'appui (6) et présentant un passage traversant (83a) ménagé dans le prolongement de la cheminée 7.

7. Outil de centrage et de serrage selon l'une des revendications 1 à 5,
**caractérisé en ce que** le support est constitué d'un carter dont une face comporte la pièce d'appui (6), les autres faces étant propres à servir à la fixation de l'outil.

## Patentansprüche

1. Zentrier- und Spannwerkzeug (1) für ein zu befestigendes Werkstück (10) mit einem durchgehenden und eingestellten Durchlaß für das besagte Werkzeug (1), wobei das besagte Werkzeug ein Führungsorgan (3), das durch den Durchlaß des zu befestigenden Werkstücks hindurchgehen kann, wenigstens ein am Führungsorgan (3) angebrachtes Spannmittel (4) und einen Körper (2) umfaßt, der die Antriebs- und Führungsmittel des besagten Werkzeugs (1) umschließt, wobei das besagte Spannmittel (4) unter der Einwirkung der Antriebsmittel zwischen einer Zentrierposition, in der es in das Innere des Führungsorgans (3) eingezogen ist, und einer Spannposition beweglich ist, in der es außerhalb des Führungsorgans (3) vorsteht, so daß das zu befestigende Werkstück (10) zwischen dem Spannmittel (3) und einer Auflagefläche (9) eingespannt ist, wobei das besagte Werkzeug außerdem einen Befestigungsträger umfaßt, der ein Auflageteil (6) mit einer Lagerbuchse (7) enthält, in der das Führungsorgan (3) des besagten Werkzeugs (1) gelagert ist, wobei das besagte Führungsorgan (3) am freien Ende des besagten Auflageteils (6) vorsteht, wobei das besagte freie Ende die Bezugsfläche oder Auflagefläche (9) des zu befestigenden Werkstücks (10) bildet, während der Körper (2) des Werkzeugs (1) an einer dem besagten Auflageteil (6) gegenüberliegenden Fläche des Trägers eingespannt ist,
**dadurch gekennzeichnet, daß** ein auswechselbarer abnehmbarer Keil (11) zwischen dem Körper (2) des Werkzeugs und der dem Auflageteil (6) gegenüberliegenden Fläche des Trägers, an welcher der Körper (2) eingespannt ist, eingefügt ist, · wobei die Dicke des Keils (11), der zwischen dem Körper (2) des Zentrier- und Spannwerkzeugs (1) und der Fläche des Trägers, an welcher der besagte Körper (2) eingespannt ist, eingefügt ist, dazu beiträgt, die Größe des Zwischenraums (t) zwischen der Auflagefläche (9) des zu befestigenden Werkstücks (10) und dem oder den Spannmitteln (4) zu definieren.

2. Zentrier- und Spannwerkzeug nach Anspruch 1,
**dadurch gekennzeichnet, daß** der Keil (11) starr ist und seine Dicke einer gegebenen Größe des Zwischenraums (t) entspricht.

3. Zentrier- und Spannwerkzeug nach Anspruch 1,
**dadurch gekennzeichnet, daß** der Keil (11) elastisch verformbar ist.

4. Zentrier- und Spannwerkzeug nach Anspruch 3,
**dadurch gekennzeichnet, daß** der Keil (11) aus einem elastisch verformbaren Werkstoff, etwa aus einem Elastomer, ausgeführt ist.

5. Zentrier- und Spannwerkzeug nach Anspruch 3,
**dadurch gekennzeichnet, daß** der Keil (11) eine Struktur mit elastischer Stauchfähigkeit, etwa wie eine Tellerfeder, aufweist.

6. Zentrier- und Spannwerkzeug nach einem der Ansprüche 1 bis 5,
**dadurch gekennzeichnet, daß** der Träger außerdem einen Befestigungswinkel in etwa in Form eines U umfaßt, von dem einer der Schenkel (82) und die Grundseite (81) zur Befestigung des Werkzeugs dienen, während der andere Schenkel (83) des U fest mit dem Auflageteil (6) verbunden ist und einen · durchgehenden Durchlaß (83a) aufweist, der in die Verlängerung der Lagerbuchse (7) eingearbeitet ist.

7. Zentrier- und Spannwerkzeug nach einem der Ansprüche 1 bis 5,
**dadurch gekennzeichnet, daß** der Träger aus einem Gehäuse besteht, von dem eine Fläche das Auflageteil (6) umfaßt, während die anderen Flächen zur Befestigung des Werkzeugs dienen können.

## Claims

1. Centring and clamping tool (1) for a part to be fixed (10), comprising a through passage (10a) adjusted for said tool (1), said tool comprising a guide device (3) which is adapted for passing through the passage of the part to be fixed, at least one clamping means (4) mounted on the guide device (3) and a body (2) containing the means for entrainment and guidance of said tool (1), said clamping means (4) being mobile, under the action of the entrainment means, between a centring position in which it is removed to the interior of the guide device (3) and a clamping position in which it projects at the exterior of the guide device (3) in such a manner that the part to be fixed (10) is clamped between the clamping means (4) and a bearing face (9), said tool comprising likewise a fixing support comprising a bearing part (6) which is equipped with a funnel (7) in which the guide device (3) of said tool (1) is mounted, said guide device (3) projecting at the free end of said bearing part (6), said free end forming the reference face or bearing face (9) of the part to be fixed (10) whilst the body (2) of the tool (1) is clamped against a support face which is opposite to said bearing part (6),
**characterised in that** an interchangeable, removable shim (11) is interposed between the body (2) of the tool and the support face which is opposite to the bearing part (6) against which the body (2) is clamped, the thickness of the shim (11) which is interposed between the body (2) of the centring and clamping tool (1) and the support face against which said body (2) is clamped contributing to the definition of the size of the gap (t) between the bearing face (9) of the part to be fixed (10) and the one or more clamping means (4).

2. Centring and clamping tool according to claim 1,
**characterised in that** the shim (11) is rigid and its thickness corresponds to a given gap size (t).

3. Centring and clamping tool according to claim 1,
**characterised in that** the shim (11) is elastically deformable.

4. Centring and clamping tool according to claim 3,
**characterised in that** the shim (11) is produced in an elastically deformable material, such as an elastomer.

5. Centring and clamping tool according to claim 3,
**characterised in that** the shim (11) has a structure with an elastic compression capacity, such as a Bellville washer.

6. Centring and clamping tool according to one of the claims 1 to 5, **characterised in that** the support comprises furthermore a fixing angle iron which is substantially U-shaped, one of the sides (82) and the base (81) of which serve for fixing the tool, the other side (83) of the U being integral with the bearing part (6) and having a through passage (83a) provided in the extension of the funnel (7).

7. Centring and clamping tool according to one of the claims 1 to 5,
**characterised in that** the support is formed by a housing, one face of which comprises the bearing part (6), the other faces being suitable for use in fixing the tool.
